# EUROPÄISCHE PATENTSCHRIFT

(11) **EP 3 435 058 B1**
(45) Veröffentlichungstag und Bekanntmachung des Hinweises auf die Patenterteilung: **29.04.2020**
(21) Anmeldenummer: 18181524.2
(22) Anmeldetag: 03.07.2018
(51) Int. Cl.: G01M 13/02, G01M 15/14, G01B 7/31, F01D 21/04

(54) **ANORDNUNG UND VERFAHREN ZUR ERKENNUNG EINES WELLENBRUCHS**
ASSEMBLY AND METHOD FOR DETECTING A BREAK IN A SHAFT
DISPOSITIF ET PROCÉDÉ DE DÉTECTION D'UNE RUPTURE D'UN ARBRE

(30) Priorität: 28.07.2017 DE 102017213094
(43) Veröffentlichungstag der Anmeldung: 30.01.2019
(73) Patentinhaber: Rolls-Royce Deutschland Ltd & Co KG, 15827 Blankenfelde-Mahlow (DE)
(72) Erfinder: LÜCK, Rudolf, 15827 Blankenfelde-Mahlow (DE)

(56) Entgegenhaltungen:
- EP-A2- 1 457 643
- EP-A2- 2 784 290
- EP-A2- 3 296 748
- DE-A1- 3 211 103
- DE-A1-102004 047 892
- GB-A- 2 123 568

## Beschreibung

Die Erfindung betrifft eine Anordnung zur Erkennung eines Wellenbruchs nach Anspruch 1, eine Turbomaschine und ein Verfahren zur Erkennung eines Wellenbruchs einer Welle nach Anspruch 17. Im Falle außergewöhnlicher Belastungen einer Welle kann es zu einem Bruch der Welle kommen. Ein Wellenbruch kann Folgeschäden nach sich ziehen, die durch die rechtzeitige Einleitung von Gegenmaßnahmen minimiert oder abgewendet werden können. Um nach möglichst kurzer Zeit Gegenmaßnahmen treffen zu können, ist es nötig, den Bruch der Welle schnell und verlässlich zu erkennen. Falls die Anordnung Teil einer Turbomaschine ist, kann als Gegenmaßnahme beispielsweise eine Treibstoffzufuhr der Turbomaschine unterbrochen werden.

Ein der Anmelderin aus der Praxis bekanntes mechanisches System zur Einleitung von Gegenmaßnahmen nach einem Wellenbruch bei einer Turbomaschine verwendet die Kombination der Welle mit einer gemeinsam mit der Welle rotierenden und koaxialen Referenzwelle. In der Welle und der Referenzwelle sind Ausnehmungen vorgesehen, die im normalen Betriebszustand der Welle außer Deckung liegen. Bricht die Welle, gelangen die Ausnehmungen in Deckung miteinander und ein Haken oder Bügel greift durch die Ausnehmungen hindurch. Diese Bewegung des Bügels unterbricht die Treibstoffzufuhr. Weitere Systeme sind aus den Veröffentlichungen GB2123568, EP1457643 und DE102004047892 bekannt.

Derartige mechanische Lösungen weisen allerdings ein hohes Gewicht und einen komplexen Aufbau auf.

Es besteht die Aufgabe, eine verbesserte Anordnung und ein verbessertes Verfahren zur Erkennung eines Wellenbruchs bereitzustellen, die insbesondere einen besonders einfachen Aufbau aufweist.

Die Aufgabe wird durch eine Anordnung mit den Merkmalen des Anspruchs 1 gelöst.

Danach umfasst eine derartige Anordnung zur Erkennung eines Wellenbruchs zumindest eine zwischen einer Antriebsseite und einer Abtriebsseite Drehmoment übertragende Welle, die (beispielsweise an zumindest einem Lager) drehbar gelagert ist, und eine gemeinsam mit der Welle (insbesondere bezüglich dem Lager) drehbare und verglichen mit der Welle weniger oder kein Drehmoment übertragende Referenzwelle. Dabei ist zumindest eine Öffnung in der Welle vorgesehen, die in einem Normalbetrieb der Welle mit einer Öffnung in der Referenzwelle überlappt, wobei die Öffnung in der Welle an einem Mantelabschnitt der Welle angeordnet ist und die Öffnung in der Referenzwelle an einem Mantelabschnitt der Referenzwelle angeordnet ist und wobei ein durchtrennbarer Signalleiter (zum Leiten von Signalen) durch das Paar von überlappenden Öffnungen der Welle und der Referenzwelle hindurch erstreckt angeordnet ist und der Signalleiter mit einer Auswerteeinheit der Anordnung wirkverbunden ist. Die Auswerteeinheit ist eingerichtet, durch ein Beaufschlagen des Signalleiters mit zumindest einem Signal eine Durchtrennung des Signalleiters zu erfassen, um dadurch einen Wellenbruch der Welle zu erkennen. Mit anderen Worten gesagt kann die Auswerteeinheit durch Beaufschlagen des Signalleiters mit dem Signal oder den Signalen erfassen, ob der Signalleiter durchtrennt ist oder nicht, z.B. indem die Auswerteeinheit feststellt, ob der Signalleiter das Signal leitet oder nicht.

Durch eine derart verbesserte Anordnung kann auf viele bewegliche mechanische Teile verzichtet werden, etwa auf einen in Ausnehmungen eingreifenden Bügel. Hierdurch ist ein einfacherer Aufbau der Anordnung möglich.

Nach der Erkennung eines Wellenbruchs können durch die Anordnung geeignete Gegenmaßnahmen eingeleitet werden, z.B. eine Sperrung einer Treibstoffzufuhr. Mit der beschriebenen Anordnung ist es möglich, die Gegenmaßnahmen mit besonders geringer Zeitverzögerung einzuleiten, was eine hohe Effektivität der Maßnahmen ermöglicht.

Für eine erhöhte Genauigkeit bei der Erkennung des Wellenbruchs können mehrere Paare von überlappenden (zumindest teilweise oder zumindest überwiegend übereinanderliegenden) Öffnungen in der Welle und der Referenzwelle vorgesehen sein, in die jeweils ein Signalleiter eingebracht ist. Alternativ oder zusätzlich sind mehrere Signalleiter in demselben Paar von überlappenden Öffnungen angeordnet.

Eine Öffnung ist z.B. ein Loch durch eine Wandung der Welle oder der Referenzwelle.

Das zumindest eine im bestimmungsgemäßen Betriebszustand der Welle überlappende Paar von Öffnungen in der Welle und der Referenzwelle überlappt in einem überlasteten, nicht bestimmungsgemäßen Betriebszustand der Welle weniger oder gar nicht miteinander. Denn ein Wellenbruch der Welle führt zu einer Relativbewegung der Welle bezüglich der Referenzwelle.

Der Signalleiter ist so dimensioniert und beschaffen, dass eine Relativbewegung der Welle bezüglich der Referenzwelle (insbesondere in Form einer Rotation) den Signalleiter durchtrennen kann, z.B. durch Schwerwirkung von Rändern der Öffnungen. Auf diese Weise wird eine verlässliche Erkennung des Wellenbruchs ermöglicht.

Der Signalleiter ist beispielsweise in ein Bruchelement eingebettet, das insbesondere ein sprödes Material umfassen oder daraus bestehen kann. Hierdurch kann ein fragiler Signalleiter eingesetzt werden und sicher in den Öffnungen gehalten werden. Das Bruchelement ist bevorzugt so ausgebildet, dass ein Bruch des Bruchelements (infolge des Wellenbruchs) den darin eingebetteten Signalleiter durchtrennt, insbesondere ein Durchtrennen erleichtert. So können auch flexible Signalleiter eingesetzt werden, die ohne Bruchelement womöglich nur verbogen, nicht aber durchtrennt würden. Das Bruchelement ist z.B. als Scherbolzen ausgebildet.

Gemäß einer Weiterbildung besteht das spröde Material aus einer Keramik oder umfasst eine Keramik. Beispielsweise ist das Bruchelement als Keramikstift oder -bolzen ausgeführt. Keramik ist besonders hitzebeständig und kann somit auch in Bereichen erhöhter Temperatur eingesetzt werden. Zudem ist Keramik spröde und bricht bei einer bestimmten Belastung.

Das Bruchelement kann eine oder mehrere Sollbruchstelle(n) aufweisen. Hierdurch ist ein besonders gut kontrollierbarer Bruch des Bruchelements möglich. Die zumindest eine Sollbruchstelle kann so am Bruchelement angeordnet oder ausgebildet sein, dass bei einem oder durch einen Bruch des Bruchelements an der Sollbruchstelle der im Bruchelement eingebettete Signalleiter durchtrennt wird.

Der Signalleiter ist beispielsweise ein elektrischer Leiter. Konkret kann der Signalleiter ein Metalldraht, z.B. ein Kupferdraht sein. Die Auswerteeinheit kann den Signalleiter mit einem elektrischen Signal beaufschlagen. Hierdurch ist ein besonders einfacher und verlässlicher Aufbau der Anordnung möglich. Leitet der Signalleiter elektrischen Strom, kann die Auswerteeinheit erkennen, dass er nicht durchtrennt ist. Leitet der Signalleiter keinen elektrischen Strom, kann die Auswerteeinheit erkennen, dass er durchtrennt ist und damit eine Durchtrennung erfassen. Das Signal ist z.B. eine Wechselspannung.

Der Signalleiter kann durch eine induktive Kopplung und/oder durch eine kapazitive Kopplung mit der Auswerteeinheit wirkverbunden sein. Insbesondere hierdurch kann die Auswerteeinheit so angeordnet sein, dass die Welle und die Referenzwelle bezüglich der Auswerteeinheit rotierbar sind. Gleichzeitig kann eine induktive und/oder kapazitive Kopplung im Wesentlichen verschleißfrei ausgeführt werden.

Der Signalleiter kann mit einem berührungslosen Signalübermittlungselement wirkverbunden, insbesondere elektrisch kontaktiert sein. Das berührungslose Signalübermittlungselement ist z.B. an der Welle befestigt. Das berührungslose Signalübermittlungselement kann Signale von der Auswerteeinheit empfangen und/oder Signale an die Auswerteeinheit senden. Es kann von der Auswerteeinheit erregt werden, sodass ein Signal durch den Signalleiter geleitet wird.

In einer Ausgestaltung ist das berührungslose Signalübermittlungselement in Form einer Spule ausgebildet. Die Spule kann sich (z.B. zumindest abschnittsweise) in Umfangsrichtung um die Welle herum erstrecken. Insbesondere kann die Spule um die Welle herum gewickelt sein. Der Signalleiter kann über die Spule induktiv mit der Auswerteeinheit gekoppelt und so damit wirkverbunden sein.

Alternativ oder zusätzlich umfasst die Anordnung einen Kondensator mit zwei Elektroden, z.B. Kondensatorplatten, wobei eine der Elektroden das berührungslose Signalübermittlungselement ausbildet und an der Welle festgelegt ist. Bei einer Rotation der Welle ist die Elektrode bezüglich der anderen der beiden Elektroden rotierbar. Mittels des Kondensators kann der Signalleiter kapazitiv mit der Auswerteeinheit gekoppelt und somit wirkverbunden sein.

Die Öffnung in der Welle und/oder die Öffnung in der Referenzwelle können jeweils in Form eines Schlitzes ausgebildet sein. Das Bruchelement kann so ausgeführt sein, dass es den Schlitz zumindest in der Länge des Schlitzes nicht vollständig ausfüllt. Auf diese Weise kann eine Toleranz bereitgestellt werden, sodass (geringfügige) und noch zum normalen, bestimmungsgemäßen Betriebszustand der Welle zu zählenden Relativbewegungen der Welle bezüglich der Referenzwelle noch nicht zu einem Brechen des Bruchelements führen.

In einer Ausgestaltung ist die Öffnung der Referenzwelle größer als die (damit überlappende) Öffnung in der Welle und weist beispielsweise eine größere lichte Weite und/oder eine größere Öffnungsquerschnittsfläche auf als die Öffnung in der Welle auf, insbesondere um einen Ausgleich einer nominalen Torsion der Welle (gegenüber der Referenzwelle) bereitzustellen.

Die Welle kann mehrere Öffnungen aufweisen, die jeweils mit einer Öffnung in der Referenzwelle überlappen. Hierbei kann eine Mehrzahl von Paaren von Öffnungen in der Welle und der Referenzwelle angeordnet sein. Bevorzugt sind mehrere, mit der Auswerteeinheit wirkverbundene und durchtrennbare Signalleiter vorgesehen, wobei sich jeder der durchtrennbaren Signalleiter (insbesondere eingebettet in jeweils ein Bruchelement) durch ein Paar von überlappenden Öffnungen hindurch erstreckt.

Die mehreren, sich durch die Öffnungen hindurch erstreckenden Signalleiter können in Reihe geschaltet sein. Hierdurch wird eine erhöhte Sicherheit bei der Erkennung eines Wellenbruchs erreicht.

Gemäß einer Ausgestaltung der Anordnung sind die Welle und die Referenzwelle über eine Bruchsicherung drehfest miteinander verbunden. Die Bruchsicherung ist so ausgebildet, dass sie bei Überschreiten einer Maximalkraft und/oder einer maximalen relativen Verlagerung der Welle bezüglich der Referenzwelle bricht. Solange die Bruchsicherung nicht gebrochen ist, verbindet sie die Welle mit der Referenzwelle und verhindert eine solche relative Verlagerung der Welle und der Referenzwelle zueinander, die zu einem Bruch des Bruchelements führen würde. Beispielsweise verbindet die Bruchsicherung die Welle und die Referenzwelle drehfest miteinander. Ist die Bruchsicherung gebrochen, verbindet sie die Welle und die Referenzwelle nicht mehr drehfest miteinander. Die Bruchsicherung kann tolerierbare und noch nicht zu einem Wellenbruch führende Verwindungen der Welle im normalen Betrieb an die Referenzwelle koppeln, sodass der Signalleiter in solchen Fällen nicht durchtrennt wird. Die Bruchsicherung ist z.B. im Bereich der einander überlappenden Öffnungen angeordnet.

Die Welle und die Referenzwelle sind koaxial zueinander ausgerichtet, z.B. für einen möglichst kompakten Aufbau der Anordnung. Die Referenzwelle ist innerhalb der Welle angeordnet. Alternativ ist die Welle innerhalb der Referenzwelle angeordnet.

Eine Anordnung der Öffnung der Welle an einem Mantelabschnitt der Welle und der Öffnung der Referenzwelle an einem Mantelabschnitt der Referenzwelle kann die Anordnung des Signalleiters erleichtern.

Gemäß einem Aspekt wird eine Turbomaschine bereitgestellt, die eine Anordnung nach einer beliebigen hierin beschriebenen Ausgestaltung umfasst. Die Turbomaschine oder Strömungsmaschine ist insbesondere in Form eines Flugzeugtriebwerks ausgebildet. Hierbei wird durch die Anordnung ein besonders einfacher Aufbau erreicht.

Erkennt die Anordnung einen Wellenbruch, kann sie geeignete Gegenmaßnahmen einleiten, z.B. um mögliche Folgeschäden abzuwenden oder zu minimieren, etwa durch Sperrung einer Treibstoffzufuhr, eine Entleerung eines Treibstoffzulaufes über ein Ventil durch Ansteuern des Ventils und/oder eine Verstellung von variablen Leitschaufeln (VSV, variable stator vanes) auf geringen Luftdurchsatz. Sobald eine Verwindung der Welle einen tolerierten Maximalwert übersteigt, wird der Signalleiter durchtrennt. Dies führt zu einer besonders schnellen Erkennung des Wellenbruchs.

Die Aufgabe wird auch durch ein Verfahren zur Erkennung eines Wellenbruchs einer Welle mit den Merkmalen des Anspruchs 17 gelöst. Das Verfahren weist die folgenden Schritte auf:
- Eine zwischen einer Antriebsseite und einer Abtriebsseite Drehmoment übertragende Welle wird bereitgestellt, wobei die Welle an zumindest einem Lager drehbar gelagert ist. Die Welle umfasst zumindest eine Öffnung.
- Eine gemeinsam mit der Welle bezüglich dem Lager drehbare Referenzwelle wird bereitgestellt. Die Referenzwelle überträgt verglichen mit der Welle weniger oder kein Drehmoment. Die Referenzwelle umfasst zumindest eine Öffnung, welche an einem Mantelabschnitt der Referenzwelle angeordnet ist und die in einem bestimmungsgemäßen Betriebszustand der Welle mit der Öffnung in der Welle, welche an einem Mantelabschnitt der Welle angeordnet ist, überlappt. Ein durchtrennbarer Signalleiter erstreckt sich durch die beiden überlappenden Öffnungen hindurch.
- Durch Beaufschlagen des Signalleiters mit einem Signal wird erfasst, ob der Signalleiter durchtrennt ist oder nicht. Ist der Signalleiter durchtrennt, wird ein Wellenbruch der Welle festgestellt.

Es kann die Durchtrennung selbst (z.B. durch die Unterbrechung eines Stromflusses) und/oder die Verstimmung eines Schwingkreises (der vorzugsweise den Signalleiter umfasst) gemessen werden.

Auf diese Weise ist es möglich, mit besonders einfachen Mitteln einen Wellenbruch der Welle zu erkennen und mit besonders geringer Verzögerung geeignete Gegenmaßnahmen einzuleiten.

In dem Verfahren kann eine Anordnung oder eine Turbomaschine gemäß einer beliebigen hierin beschriebenen Ausführung verwendet werden.

Im Zusammenhang mit den in den Figuren dargestellten Ausführungsbeispielen wird die Erfindung erläutert. Dabei zeigen
- Fig. 1: eine schematische Darstellung eines Flugzeugtriebwerkes als Ausführungsform einer Turbomaschine;
- Fig. 2: eine schematische Darstellung einer Anordnung zur Erkennung eines Wellenbruchs mit drei entlang einer Rotationsachse einer Welle nebeneinander angeordneten Bruchelementen und einem berührungslosen Signalübermittlungselement in Form einer Spule;
- Fig. 3A: eine schematische Darstellung einer Anordnung zur Erkennung eines Wellenbruchs mit zwei auf gegenüberliegenden Seiten einer Rotationsachse einer Welle angeordneten Bruchelementen und einem berührungslosen Signalübermittlungselement in Form einer Spule in einem bestimmungsgemäßen Betriebszustand der Welle;
- Fig. 3B: Die Anordnung gemäß Fig. 3A nach einem Wellenbruch der Welle;
- Fig. 4: eine schematische Darstellung einer Anordnung zur Erkennung eines Wellenbruchs mit mehreren Bruchelementen und einem berührungslosen Signalübermittlungselement in Form einer Elektrode eines Kondensators;
- Fig. 5: eine schematische Darstellung mehrerer verschiedener möglicher Ausführungen von Öffnungen in der Welle und der Referenzwelle in den Anordnungen gemäß Fig. 2 bis 4;
- Fig. 6: eine schematische Darstellung einer Anordnung zur Erkennung eines Wellenbruchs mit einer bei einem definierten Drehmoment brechenden Bruchsicherung mit mehreren Bruchsicherungselementen; und
- Fig. 7: ein Verfahren zur Erkennung eines Wellenbruchs einer Welle.

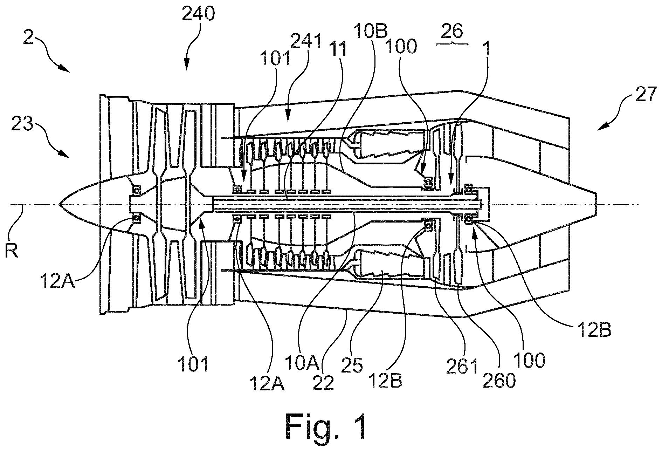

Fig. 1 zeigt eine Turbomaschine 2 in der beispielhaften Ausführungsform eines Flugzeugtriebwerks für ein Flugzeug. Die Turbomaschine 2 umfasst mehrere, vorliegend zwei um eine gemeinsame Rotationsachse R drehbare Wellen 10A, 10B. Die Wellen 10A, 10B sind innerhalb eines Gehäuses 22 der Turbomaschine 2 angeordnet. Das Gehäuse 22 definiert einen Lufteinlauf 23 der Turbomaschine 2.

Durch den Lufteinlauf 23 strömt ein Luftstrom in die Turbomaschine 2. Auf einer dem Lufteinlauf 23 gegenüberliegenden Seite der Turbomaschine 2 weist die Turbomaschine 2 eine Düse 27 auf. Die Turbomaschine 2 hat eine axiale Hauptströmungsrichtung, die im Wesentlichen parallel zur Rotationsachse R der beiden Wellen 10A, 10B verläuft und vom Lufteinlauf 23 zur Düse 27 gerichtet ist. Im Wesentlichen in Richtung der Hauptströmungsrichtung gesehen umfasst die Turbomaschine 2 nach dem Lufteinlauf 23 einen Fan 240, einen Verdichter 241, eine Brennkammer 25, eine Turbine 26 und die Düse 27.

Die Turbomaschine 2 ist vorliegend zweistufig ausgeführt. Eine der Wellen 10A, 10B dient als Niederdruckwelle 10A, die andere als Hochdruckwelle 10B. An der Niederdruckwelle 10A sind der Fan 240 sowie eine Niederdruckturbine 260 der Turbine 26 festgelegt. An der Hochdruckwelle 10B sind der Verdichter 241 sowie eine Hochdruckturbine 260 der Turbine 26 festgelegt.

Die Turbomaschine 2 arbeitet in an sich bekannter Weise. Der Fan 240 und der Verdichter 241 verdichten den einlaufenden Luftstrom und führen ihn zur Verbrennung in die Brennkammer 25. Aus der Brennkammer 25 austretende heiße Verbrennungsgase werden in der Hochdruckturbine 261 und in der Niederdruckturbine 260 entspannt, bevor sie durch die Düse 27 austreten. Die Düse 27 sorgt für eine Restentspannung der austretenden heißen Verbrennungsgase und für eine Vermischung mit Sekundärluft, wobei der austretende Luftstrom beschleunigt wird.

Die Niederdruckturbine 260 treibt den Fan 240 über die Niederdruckwelle 10A an. Die Hochdruckturbine 261 treibt den Verdichter 241 über die Hochdruckwelle 10B an.

Beide Wellen 10A, 10B sind über geeignete Lager 12A, 12B gegenüber dem Gehäuse 22 der Turbomaschine 2 um die Rotationsachse R drehbar gelagert. Das Gehäuse 22 ist fest mit dem Flugzeug verbindbar oder verbunden.

Gemäß Fig. 1 weisen die Niederdruckwelle 10A und die Hochdruckwelle 10B an ihrem jeweiligen dem Lufteinlauf 23 zugewandten Ende ein vorderes Lager 12A auf. Die vorderen Lager 12A sind jeweils z.B. als Kugellager, insbesondere als Schrägkugellager ausgebildet. An ihrem jeweiligen dem Luftauslass 27 zugewandten Ende umfassen die Niederdruckwelle 10A und die Hochdruckwelle 10B ein hinteres Lager 12B. Die hinteren Lager 12B sind jeweils z.B. als Wälzlager ausgebildet.

Die Hochdruckwelle 10B ist als Hohlwelle ausgebildet. Die Niederdruckwelle 10A ist innerhalb der Hochdruckwelle 10B angeordnet.

Beide Wellen 10A, 10B weisen jeweils eine Antriebsseite 100 und eine Abtriebsseite 101 auf. Die Antriebsseiten 100 werden durch die jeweils zugeordneten Turbinenstufen 260, 261 angetrieben. Die Abtriebsseiten 101 werden durch die jeweilige Antriebsseite 100 angetrieben und treiben den Fan 240 beziehungsweise den Verdichter 241 an.

Unvorhergesehene Einflüsse, insbesondere zu große Kräfte zwischen der Antriebsseite 100 und der Abtriebsseite 101 einer der Wellen 10A, 10B, können zu einer Torsion und/oder zu Torsionsschwingungen einer oder beider Wellen 10A, 10B führen oder gar zu deren Bruch.

Die Turbomaschine 2 umfasst zumindest eine Anordnung 1 (1.1 bis 1.4) zur Erkennung eines Wellenbruchs, um nach einem Wellenbruch einer der Wellen 10A, 10B oder mehrerer Wellen 10A, 10B der Turbomaschine 2 Gegenmaßnahmen einzuleiten. Die Anordnung 1 wird anhand der nachfolgenden Figuren näher erläutert werden.

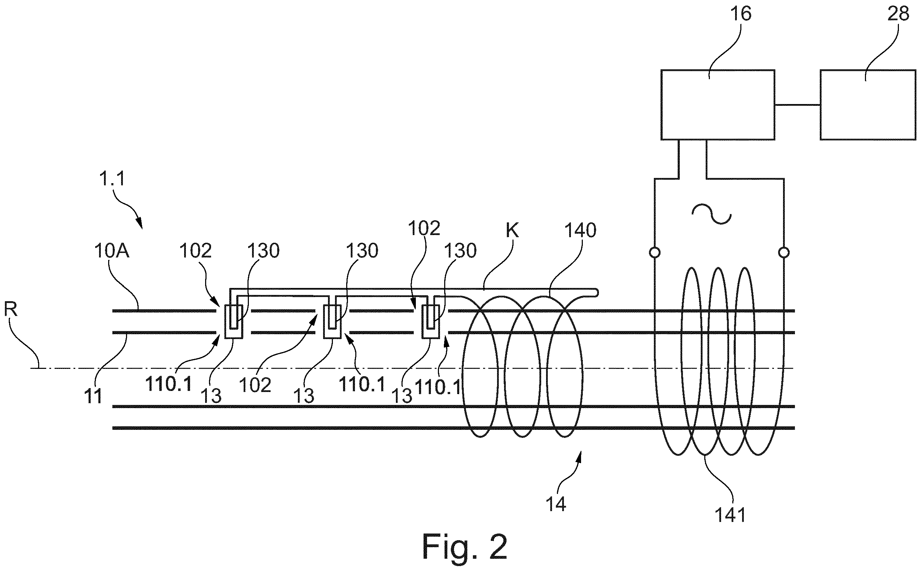

Fig. 2 zeigt die Anordnung 1.1 zur Erkennung eines Wellenbruchs, vorliegend am Beispiel der Niederdruckwelle 10A, wobei die nachfolgenden Ausführungen entsprechend auch für die Hochdruckwelle 10B oder allgemein für eine oder mehrere beliebige Wellen 10A, 10B der Turbomaschine 2 gelten.

Die Niederdruckwelle 10A ist am Lager 12A bezüglich eines triebwerksfesten Bauteils um die Rotationsachse R drehbar gelagert. Das Lager 12A ist vorliegend als Fanlager ausgebildet, wobei auch andere Anordnungen möglich sind. Wie in Fig. 1 veranschaulicht, ist das Lager 12A benachbart des Fans 107 angeordnet. Das triebwerksfeste Bauteil ist z.B. mit dem Gehäuse 22 der Turbomaschine 2 fest verbunden und/oder fest mit dem Flugzeug verbunden oder verbindbar.

Fig. 2 zeigt die Anordnung 1.1 im Querschnitt entlang der Rotationsachse R der Niederdruckwelle 10A und der auch in Fig. 1 gezeigten Referenzwelle 11. Die Niederdruckwelle 10A ist als Hohlwelle ausgebildet. Innerhalb der Niederdruckelle 10A ist koaxial dazu die Referenzwelle 11 angeordnet.

In der Niederdruckwelle 10A (konkret in einer Wandung der Niederdruckwelle 10A) sind mehrere Öffnungen 102 ausgebildet, vorliegend drei Öffnungen 102. Die Öffnungen 102 sind entlang der Rotationsachse R versetzt zueinander angeordnet.

In der Referenzwelle 11 sind ebenfalls mehrere Öffnungen 110.1 ausgebildet, vorliegend ebenfalls drei Öffnungen 110.1. Die Öffnungen 110.1 in der Referenzwelle 11 sind (zumindest teilweise) überlappend mit den Öffnungen 102 in der Niederdruckwelle 10A angeordnet, sodass mehrere (hier drei) Paare von einander (zumindest teilweise) überlappenden Öffnungen 102, 110.1 gebildet sind. Durch jedes Paar von miteinander überlappenden Öffnungen 102, 110.1 hindurch erstreckt sich jeweils ein Bruchelement 13.

Jedes der Bruchelemente 13 umfasst einen Keramikkörper, in den ein Signalleiter 130 eingebettet ist. Der Keramikkörper besteht bevorzugt aus einem hitzebeständigen Keramikmaterial. Die Signalleiter 130 der Bruchelemente 13 sind durch elektrische Verbindungen miteinander in Reihe geschaltet. Jeder der Signalleiter 130 ist in Form einer Schlaufe ausgebildet, die sich durch beide übereinanderliegenden Öffnungen 102, 110.1 hindurch erstreckt.

Die Anordnung 1.1 umfasst ferner ein berührungsloses Signalübermittlungselement in Form einer Spule 140. Die Spule 140 bildet mit den Signalleitern 130 einen geschlossenen Stromkreis K. Optional umfasst der Stromkreis K noch weitere Bauteile, wie z.B. einen in Reihe geschalteten Widerstand. Wird in der Spule 140 eine Wechselspannung induziert, so fließt ein Wechselstrom durch die Signalleiter 130. Die Spule ist drehfest mit der Niederdruckwelle 10A verbunden, z.B. um die Niederdruckwelle 10A herum gewickelt.

Eine feststehende Spule 141 ist benachbart der Spule 140 angeordnet, beispielsweise ist die feststehende Spule 141 neben der Spule 140 oder um die Spule 140 herum angeordnet. Die feststehende Spule 141 ist z.B. an einem triebwerksfesten Bauteil montiert.

Die feststehende Spule 141 ist an eine Auswerteeinheit 16 angeschlossen. Die Auswerteeinheit kann die feststehende Spule 141 mit einem Signal, insbesondere in Form einer Wechselspannung beaufschlagen. Die Wechselspannung erzeugt einen veränderlichen magnetischen Fluss, der wiederum eine Wechselspannung in der Spule 140 an der Niederdruckwelle 10A induziert. Die Spule 140 entspricht einer Sekundärwicklung eines Transformators. Durch die in der Spule 140 induzierte Wechselspannung fließt im Stromkreis K ein Strom. Auf diese Weise kann die Auswerteeinheit 16 jeden der Signalleiter 130 mit einem (elektrischen) Signal beaufsch lagen.

Im normalen Betriebszustand der Niederdruckwelle 10A rotiert die Referenzwelle 11 gemeinsam mit der Niederdruckwelle 10A. Im Fall eines Bruchs der Niederdruckwelle 10A kommt es zu einer Rotation der Niederdruckwelle 10A oder des gebrochenen Teils der Niederdruckwelle 10A mit den Öffnungen 102 relativ zur Referenzwelle 11. Beispielsweise ist hierzu die Referenzwelle 11 nur mit der Antriebsseite 100 der Niederdruckwelle 10A drehfest verbunden und die Öffnungen 102, 110.1 sind benachbart der Abtriebsseite 101 der Niederdruckwelle 10A angeordnet, oder umgekehrt.

Eine Relativbewegung zwischen der Niederdruckwelle 10A (oder einem Teil dessen) und der Referenzwelle 11 bringt die Öffnungen 102, 110.1, die zuvor zumindest teilweise oder zumindest überwiegend überlappend angeordnet waren, zumindest teilweise außer Deckung zueinander. Anders ausgedrückt verringert sich der Überlapp der Öffnungen 102, 110.1. Hierdurch werden die Bruchelemente 13 abgeschert und/oder zerbrochen. Dies führt zu einem Durchtrennen der im Bruchelement 13 eingebetteten Signalleiter 130. Das Durchtrennen eines Signalleiters 130 führt dazu, dass der Stromkreis K unterbrochen wird. Dies macht sich an der Auswerteeinheit 16 an einer veränderten Spannung und/oder einem veränderten Strom an der feststehenden Spule 141 bemerkbar, insbesondere an einer sprunghaft ansteigenden Spannung. Auf diese Weise kann die Auswerteeinheit 16 durch Beaufschlagen der Signalleiter 130 mit dem Signal erkennen, ob die Signalleiter 130 durchtrennt sind oder nicht. Die Spulen 140, 141 bilden gemeinsam eine induktive Kopplungseinrichtung in Form eines Spulenpaars 14.

Falls die Auswerteeinheit 16 erkennt, dass zumindest einer der Signalleiter 130 durchtrennt worden ist, kann sie beispielsweise ein Alarmsignal ausgeben und/oder eine Treibstoffzufuhrsteuerung 28 der Turbomaschine 2 anweisen, eine Treibstoffzufuhr zu unterbrechen.

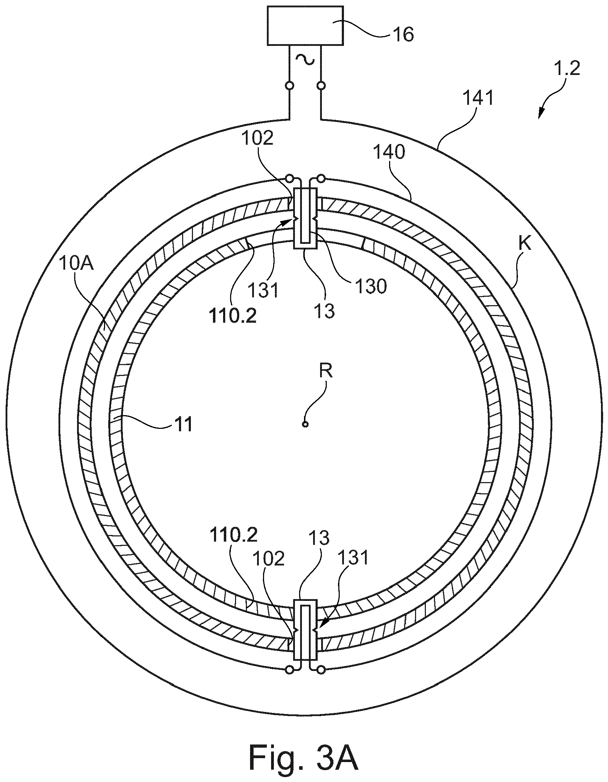

Fig. 3A zeigt eine weitere Anordnung 1.2 zur Erkennung eines Wellenbruchs, hier im Querschnitt durch die Rotationsachse R.

Die Niederdruckwelle 10A umfasst hier zwei Öffnungen 102. Die beiden Öffnungen 102 sind vorliegend auf gegenüberliegenden Seiten der Rotationsachse R angeordnet (oder allgemein um die Rotationsachse R herum versetzt zueinander angeordnet). Überlappend mit den Öffnungen 102 der Niederdruckwelle 10A sind Öffnungen 110.2 in der Referenzwelle 11 ausgebildet, die wie bei der Anordnung gemäß Fig. 2 koaxial innerhalb der Niederdruckwelle 10A angeordnet ist.

Die Öffnungen 110.2 der Referenzwelle 11 sind gemäß Fig. 3A mit einem größeren Durchmesser (in Umfangsrichtung) ausgebildet als die Öffnungen 102 der Niederdruckwelle 10A, was einen Ausgleich, z.B. bei Verwindungen der Niederdruckwelle 10A in einem nominalen Drehwinkel, ermöglicht. Alternativ sind die Öffnungen 102 der Niederdruckwelle 10A mit einem größeren Durchmesser (oder Öffnungswinkel) ausgebildet als die Öffnungen 110.2 der Referenzwelle 11. Allgemein besteht ein Spiel zwischen jedem der Bruchelemente 13 und den Rändern zumindest einer der Öffnungen 110.2, 102. Hierdurch wird vermieden, dass eine nominale Verdrehung der Referenzwelle 11 und der Niederdruckwelle 10A zueinander nicht zu einer Auslösung führt.

Jeweils durch ein Paar von überlappenden Öffnungen 102, 110.2 ist ein Bruchelement 13 gesteckt. Die Signalleiter 130 der Bruchelemente 13 sind unter Ausbildung der Spule elektrisch miteinander zu einem Stromkreis K in Reihe geschaltet. Die Spule 140 wird von der feststehenden Spule 141 außen umgeben. Beide Spulen 140, 141 können eine oder mehrere Windungen aufweisen. Die feststehende Spule 141 ist, wie im Zusammenhang mit Fig. 2 erläutert, an die Auswerteeinheit 16 angeschlossen.

Die Bruchelemente 13 umfassen jeweils eine Sollbruchstelle 131 in Form eines Einschnitts oder einer umlaufenden Kerbe. Hierdurch brechen die Bruchelemente 13 bei einer Belastung durch Ränder der Öffnungen 102, 110.2 in vorbestimmter Weise.

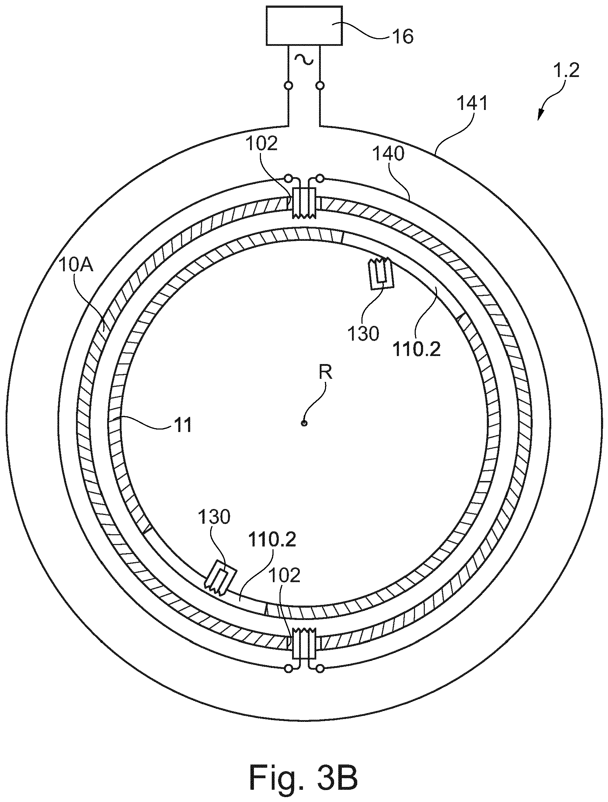

Fig. 3B zeigt die Situation nach einem Wellenbruch der Niederdruckwelle 10A. Die Niederdruckwelle 10A wurde relativ zur Referenzwelle 11 so weit rotiert, dass die zuvor übereinanderliegenden Öffnungen 102, 110.2 einander nicht mehr überlappen (oder dass zumindest eine Überlappfläche der Öffnungen 102, 110.2 deutlich verkleinert ist). Hierdurch sind die Bruchelemente 13 an ihren Sollbruchstellen 131 gebrochen. Durch das Zerbrechen der Bruchelemente 13 an den Sollbruchstellen 131 wurden die Signalleiter 130 durchtrennt.

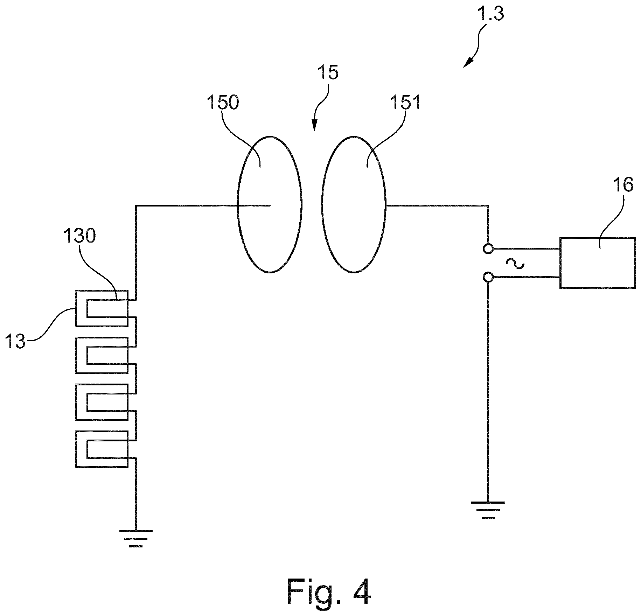

Fig. 4 zeigt schematisch einige Komponenten einer weiteren Anordnung 1.3 zur Erkennung eines Wellenbruchs. Diese umfasst mehrere, vorliegend vier Bruchelemente 13, die entlang der Rotationsachse R und/oder um die Rotationsachse R herum beabstandet zueinander in überlappenden Öffnungen der Niederdruckwelle 10A und der Referenzwelle 11 angeordnet sind (in Fig. 4 nicht gezeigt).

Im Unterschied zu einer induktiven Signalübermittlung ist bei der Anordnung 1.3 gemäß Fig. 4 eine kapazitive Signalübermittlung vorgesehen. Hierzu sind die Signalleiter 130 in Reihe geschaltet. Ein Leitungsende der Reihenschaltung ist auf eine Masse der Anordnung 1.3 oder der Turbomaschine 2 gelegt. Das andere Leitungsende der Reihenschaltung ist an eine flächige Elektrode 150 angeschlossen. Die Elektrode 150 ist benachbart einer weiteren flächigen, feststehenden Elektrode 151 angeordnet. Die feststehende Elektrode 151 ist an einem triebwerksfesten Bauteil festgelegt. Die Elektrode 150 ist an der Niederdruckwelle 150 festgelegt. Die feststehende Elektrode 151 ist an einen Kontakt der Auswerteeinheit 16 angeschlossen, die mit einem weiteren Kontakt ebenfalls auf die Masse gelegt ist. An ihre Kontakte legt die Auswerteeinheit 16 eine Wechselspannung an. Die beiden Elektroden 150, 151 bilden gemeinsam einen Kondensator 15 mit einer Kapazität. Die Anordnung 1.3 umfasst einen Schwingkreis, wobei die Signalleiter 130 einen Teil des Schwingkreises bilden. Wird infolge eines Wellenbruchs der Niederdruckwelle 10A zumindest einer der Signalleiter 130 durchtrennt, liegt die Elektrode 150 nicht mehr auf Masse, was die Auswerteeinheit 16 z.B. anhand eines veränderten Wechselstromwiderstands und/oder einer veränderten Resonanzfrequenz der Schaltung erfasst. Hierdurch kann die Auswerteeinheit 16 auf einen Wellenbruch der Niederdruckwelle 10A schließen. Alternativ oder zusätzlich kann die Auswerteeinheit 16 eine Zeitkonstante bei einem oder mehreren Auflade- und/oder Entladevorgängen des Kondensators 15 Messen. Mittels einer Ladespannung beaufschlagt die Auswerteeinheit 16 die Signalleiter 130 mit einem elektrischen Signal. Erkennt die Auswerteeinheit 16 eine Änderung in der Zeitkonstante (z.B. zwischen zwei aufeinanderfolgenden Messungen) und/oder eine Verstimmung des Schwingkreises, kann sie daraus auf eine Durchtrennung zumindest eines der Signaleiter 130 und so auf einen Wellenbruch schließen.

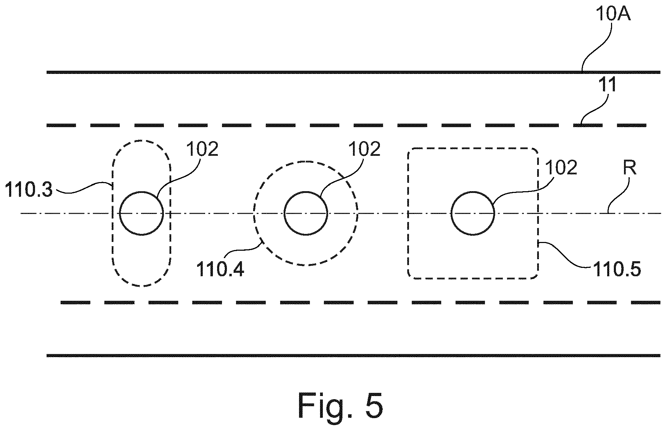

Fig. 5 zeigt in einer Draufsicht auf die Niederdruckwelle 10A mögliche Ausgestaltungen von Öffnungen 110.3, 110.4, 110.5 in der Referenzwelle 11. In allen drei gezeigten Fällen ist die Öffnung 110.3, 110.4, 110.5 in der Referenzwelle 11 größer als die jeweils zugeordnete Öffnung 102 in der Niederdruckwelle 10A und ermöglicht so einen Ausgleich für die nominale Verdrehung der Niederdruckwelle 10A, die in einem bestimmungsgemäßen Betrieb der Turbomaschine 2 auftreten kann.

Die in der Fig. 5 links gezeigte Öffnung 110.3 der Referenzwelle 11 ist schlitzförmig ausgebildet. Vorliegend ist diese Öffnung 110.3 länglich mit einer größeren Länge als Breite. Mit ihrer Länge erstreckt sich die Öffnung 110.3 entlang des Umfangs der Referenzwelle 11 um die Rotationsachse R, mit ihrer Breite entlang der Rotationsachse R. Diese Öffnung 110.3 erlaubt ein Verdrehen oder Verwinden der Niederdruckwelle 10A bezüglich der Referenzwelle 11 um die Rotationsachse R in einem vorgegebenen Toleranzbereich (z.B. +/- 5 Grad), bevor sie außer Deckung mit der zugeordneten Öffnung 102 in der Niederdruckwelle 10A gerät.

Die in der Mitte der Fig. 5 dargestellte Öffnung 110.4 der Referenzwelle 11 ist kreisförmig mit einem größeren Durchmesser als die ebenfalls kreisförmige Öffnung 102 der Niederdruckwelle 10A ausgebildet.

Die in der Fig. 5 rechts dargestellte Öffnung 110.5 der Referenzwelle 11 ist im Wesentlichen rechteckig mit einer größeren Länge und Breite als die kreisförmige Öffnung 102 der Niederdruckwelle 10A ausgebildet.

Die beiden letztgenannten Öffnungen 110.4, 110.5 erlauben relative Verlagerungen der Niederdruckwelle 10A gegenüber der Referenzwelle 11 entlang der Rotationsachse R, sowie ein Verdrehen oder Verwinden der Niederdruckwelle 10A bezüglich der Referenzwelle 11 um die Rotationsachse R in einem vorgegebenen Toleranzbereich.

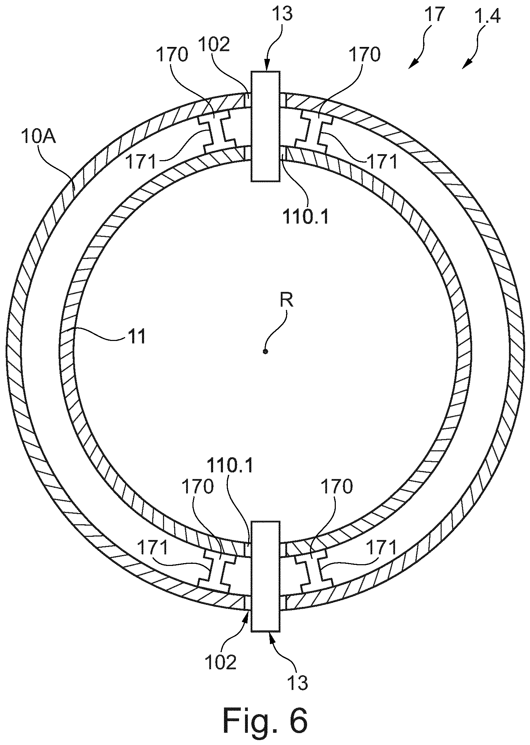

Fig. 6 zeigt eine weitere Anordnung 1.4 zur Erkennung eines Wellenbruchs im Querschnitt durch die Rotationsachse R. Nachfolgend werden nur die Unterschiede zur Anordnung 1.2 gemäß Fig. 3A, 3B beschrieben und im Übrigen auf die obigen Ausführungen verwiesen.

Die Anordnung 1.4 umfasst eine Bruchsicherung 17. Mittels der Bruchsicherung 17 sind die Niederdruckwelle 10A und die Referenzwelle 11 drehfest miteinander verbunden. Die Bruchsicherung 17 ist so ausgebildet, dass sie bei Überschreiten einer vorgegebenen Maximalkraft bricht. Hierzu umfasst die Bruchsicherung 17 mehrere Bruchsicherungselemente 170. Jedes Bruchsicherungselement 170 ist fest mit der Niederdruckwelle 10A und der Referenzwelle 11 verbunden. Die Bruchsicherungselemente 170 verhindern eine Relativbewegung zwischen der Niederdruckwelle 10A und der Referenzwelle 11. Die Bruchsicherungselemente 170 sind ausgebildet, ab einer bestimmten Maximalkraft zu brechen.

Brechen die Bruchsicherungselemente 170, ist eine Relativbewegung zwischen der Niederdruckwelle 10A und der Referenzwelle 11 freigegeben. Diese Relativbewegung kann dann die Öffnungen 102, 110.1 in der Niederdruckwelle 10A und der Referenzwelle 11 außer Deckung zueinander bringen, sodass die jeweils in einem Paar von Öffnungen 102, 110.1 aufgenommenen Bruchelemente 13 brechen und dabei die jeweiligen Signalleiter 130 (in Fig. 6 nicht gezeigt) durchtrennt werden.

Gemäß Fig. 6 sind die Öffnungen 102 in der Niederdruckwelle 10A im Wesentlichen gleich groß wie die Öffnungen 110.1 in der Referenzwelle 11. Die Öffnungen 102 in der Niederdruckwelle 10A fluchten mit den Öffnungen 110.1 in der Referenzwelle 11.

Für einen kontrollierten Bruch umfassen die Bruchsicherungselemente 170 Sollbruchstellen 171, vorliegend jeweils in Form einer umlaufenden Nut. Alternativ oder zusätzlich können die Bruchsicherungselemente 170 aus einem spröden Material gefertigt sein.

Gemäß Fig. 6 sind jeweils Bruchsicherungselemente 170 sind auf gegenüberliegenden Seiten eines Paars überlappender Öffnungen 102, 110.1 in der Niederdruckwelle 10A und der Referenzwelle 11 angeordnet.

Alternativ ist nur ein Bruchsicherungselement 170 pro Paar von überlappenden Öffnungen 102, 110.1 vorgesehen. Optional kann dieses die Öffnungen 102, 110.1 umschließen, z.B. um die Öffnungen 102, 110.1 gegenüber dem Zwischenraum zwischen der Niederdruckwelle 110.1 und der Referenzwelle 11 abzudichten.

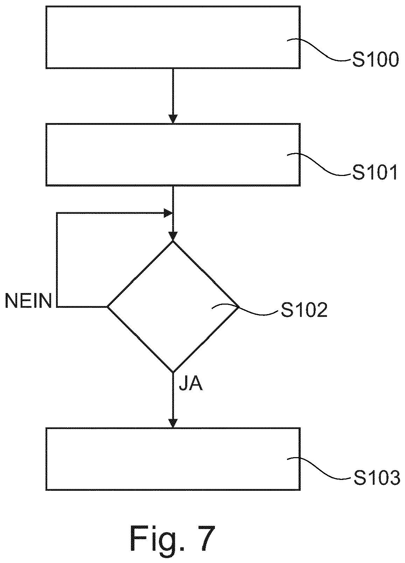

Fig. 7 zeigt ein Verfahren zur Erkennung eines Wellenbruchs einer Welle 10A. Das Verfahren umfasst folgende Schritte:
In Schritt S100 wird eine Welle 10A bereitgestellt.

In Schritt S101 wird eine Referenzwelle 11 bereitgestellt, die gemeinsam mit der Welle 10A rotierbar ist. Die Referenzwelle 11 umfasst zumindest eine Öffnung 110.1-110.5, wobei die Öffnung 110.1-110.5 der Referenzwelle 11 an einem Mantelabschnitt der Referenzwelle 11 angeordnet ist und in einem bestimmungsgemäßen Betriebszustand der Welle 10A mit einer Öffnung 102, welche an einem Mantelabschnitt der Welle 10A angeordnet ist, in der Welle 10A überlappt. Durch beide einander überlappenden Öffnungen hindurch erstreckt sich ein durchtrennbarer Signalleiter 130.

In Schritt S102 wird geprüft, ob der Signalleiter durchtrennt ist oder nicht durchtrennt ist, um eine Durchtrennung des Signalleiters 130 zu erfassen. Dies erfolgt durch Beaufschlagen des Signalleiters 130 mit einem Signal. Wird keine Durchtrennung des Signalleiters erfasst, führt das Verfahren den Schritt S102 erneut durch.

Wird eine Durchtrennung des Signalleiters erfasst, so wird ein Wellenbruch der Welle 10A erkannt und z.B. mit Schritt S103 fortgefahren.

In Schritt S103 werden geeignete Maßnahmen ergriffen, um die Folgen des Wellenbruchs zu minimieren. Beispielsweise wird eine Treibstoffzufuhr gesperrt oder variablen Leitschaufeln werden verstellt. Auf diese Weise ist es möglich, in einfacher Weise und ohne mechanisch bewegliche Teile einen Wellenbruch der Welle zu erkennen und schnell entsprechende Maßnahmen einzuleiten.

Zur Durchführung des Verfahrens kann jede hierin beschriebene Anordnung 1 zur Erkennung eines Wellenbruchs verwendet werden.

### Bezugszeichenliste

- 1.1 bis 1.4: Anordnung
- 10A: Welle (Niederdruckwelle)
- 10B: Welle (Hochdruckwelle)
- 100: Antriebsseite
- 101: Abtriebsseite
- 102: Öffnung
- 11: Referenzwelle
- 110.1 bis 110.5: Öffnung
- 12A, 12B: Lager
- 13: Bruchelement
- 130: Signalleiter
- 131: Sollbruchstelle
- 14: Spulenpaar (induktive Kopplungseinrichtung)
- 140: Spule (berührungsloses Signalübermittlungselement)
- 141: feststehende Spule
- 15: Kondensator (kapazitive Kopplungseinrichtung)
- 150: Elektrode (berührungsloses Signalübermittlungselement)
- 151: feststehende Elektrode
- 16: Auswerteeinheit
- 17: Bruchsicherung
- 170: Bruchsicherungselement
- 171: Sollbruchstelle
- 2: Turbomaschine
- 22: Gehäuse
- 23: Lufteinlauf
- 240: Fan
- 241: Verdichter
- 25: Brennkammer
- 26: Turbine
- 260: Niederdruckturbine
- 261: Hochdruckturbine
- 27: Düse
- 28: Treibstoffzufuhrsteuerung
- K: Stromkreis
- R: Rotationsachse

## Patentansprüche

1. Anordnung zur Erkennung eines Wellenbruchs, umfassend:
- eine Welle (10A) und
- eine gemeinsam mit der Welle (10A) rotierbare Referenzwelle (11),
wobei eine Öffnung (102) in der Welle (10A) in einem bestimmungsgemäßen Betriebszustand der Welle (10A) mit einer Öffnung (110.1-110.5) in der Referenzwelle (11) überlappt und sich ein durchtrennbarer Signalleiter (130) durch die beiden Öffnungen (102, 110.1-110.5) hindurch erstreckt und mit einer Auswerteeinheit (16) wirkverbunden ist und die Auswerteeinheit (16) eingerichtet ist, durch Beaufschlagen des Signalleiters (130) mit einem Signal ein Durchtrennen des Signalleiters (130) zu erfassen, um einen Wellenbruch der Welle (10A) zu erkennen, **dadurch gekennzeichnet, dass** der Signalleiter (130) ein elektrischer Leiter ist
und dass die Öffnung (102) in der Welle (10A) an einem Mantelabschnitt der Welle (10A) angeordnet ist
und dass die Öffnung (110.1-110.5) in der Referenzwelle (11) an einem Mantelabschnitt der Referenzwelle (11) angeordnet ist.

2. Anordnung nach Anspruch 1, **dadurch gekennzeichnet, dass** die im bestimmungsgemäßen Betriebszustand überlappenden Öffnungen (102, 110.1-110.5) der Welle (10A) und der Referenzwelle (11) in einem überlasteten Betriebszustand weniger oder nicht miteinander überlappen.

3. Anordnung nach Anspruch 1 oder 2, **dadurch gekennzeichnet, dass** der Signalleiter (130) in ein Bruchelement (13) aus sprödem Material eingebettet ist.

4. Anordnung nach Anspruch 3, **dadurch gekennzeichnet, dass** das spröde Material Keramik ist.

5. Anordnung nach einem der Ansprüche 3 oder 4, **dadurch gekennzeichnet, dass** das Bruchelement (13) eine Sollbruchstelle (131) aufweist.

6. Anordnung nach einem der vorhergehenden Ansprüche, **dadurch gekennzeichnet, dass** der Signalleiter (130) durch eine induktive und/oder kapazitive Kopplung mit der Auswerteeinheit (16) wirkverbunden ist.

7. Anordnung nach einem der vorhergehenden Ansprüche, **dadurch gekennzeichnet, dass** der Signalleiter (130) mit einem berührungslosen Signalübermittlungselement (140; 150) wirkverbunden, insbesondere elektrisch kontaktiert ist.

8. Anordnung nach Anspruch 7, **dadurch gekennzeichnet, dass** das berührungslose Signalübermittlungselement (140) in Form einer Spule ausgebildet ist, die sich zumindest abschnittsweise in Umfangsrichtung um die Welle (10A) herum erstreckt.

9. Anordnung nach Anspruch 8, **gekennzeichnet durch** einen Kondensator (15) mit zwei Elektroden (150, 151), wobei eine der Elektroden als berührungsloses Signalübermittlungselement (150) an der Welle (10A) festgelegt ist und bei Rotation der Welle (10A) bezüglich der anderen der Elektroden (151) rotierbar ist.

10. Anordnung nach einem der vorhergehenden Ansprüche, **dadurch gekennzeichnet, dass** die Öffnung (102) in der Welle (10A) und/oder die Öffnung (110.1-110.5) in der Referenzwelle (11) schlitzförmig ausgebildet ist/sind.

11. Anordnung nach einem der vorhergehenden Ansprüche, **dadurch gekennzeichnet, dass** die Öffnung (110.1-110.5) der Referenzwelle (11) größer ist als die Öffnung (102) in der Welle (10A).

12. Anordnung nach einem der vorhergehenden Ansprüche, **dadurch gekennzeichnet, dass** mehrere, mit der Auswerteeinheit (16) wirkverbundene, durchtrennbare Signalleiter (130) und mehrere Paare voneinander überlappenden Öffnungen (102, 110.1-110.5) in der Welle (10A) und der Referenzwelle (11) vorgesehen sind, wobei sich jeweils ein durchtrennbarer Signalleiter (130) durch ein Paar von überlappenden Öffnungen (102, 110.1-110.5) hindurch erstreckt.

13. Anordnung nach Anspruch 12, **dadurch gekennzeichnet, dass** die mehreren, sich durch die Öffnungen (102, 110.1-110.5) hindurch erstreckenden Signalleiter (130) miteinander in Reihe geschaltet sind.

14. Anordnung nach einem der vorhergehenden Ansprüche, **dadurch gekennzeichnet, dass** die Welle (10A) und die Referenzwelle (11) über eine Bruchsicherung (17) drehfest miteinander verbunden sind, wobei die Bruchsicherung (17) bei Überschreiten einer vorgegebenen Maximalkraft bricht.

15. Anordnung nach einem der vorhergehenden Ansprüche, **dadurch gekennzeichnet, dass** die Welle (10A) und die Referenzwelle (11) koaxial zueinander ausgerichtet sind, insbesondere derart, dass die Referenzwelle (11) innerhalb der Welle (10A) angeordnet ist.

16. Turbomaschine (2), insbesondere in Form eines Flugzeugtriebwerks **gekennzeichnet durch** eine Anordnung (1.1-1.4) nach einem der vorhergehenden Ansprüche.

17. Verfahren zur Erkennung eines Wellenbruchs einer Welle (10A), mit folgenden; Schritten:
- Bereitstellen (S100) einer Welle (10A);
- Bereitstellen (S101) einer gemeinsam mit der Welle (10A) rotierbaren Referenzwelle (11) mit einer Öffnung (110.1-110.5), welche an einem Mantelabschnitt der Referenzwelle (11) angeordnet ist, wobei die Öffnung (110.1-110.5) der Referenzwelle (11) in einem bestimmungsgemäßen Betriebszustand der Welle (10A) mit einer Öffnung (102), welche an einem Mantelabschnitt der Welle (10A) angeordnet ist, überlappt und sich ein durchtrennbarer elektrischer Signalleiter (130) durch die beiden Öffnungen (102, 110.1-110.5) hindurch erstreckt; und
- Erfassen (S102), ob der elektrische Signalleiter (130) durchtrennt ist oder nicht, durch Beaufschlagen des Signalleiters (130) mit einem Signal, um einen Wellenbruch der Welle (10A) zu erkennen.

## Claims

1. Arrangement for identifying a break in a shaft, comprising:
- a shaft (10A) and
- a reference shaft (11) able to be rotated jointly with the shaft (10A),
wherein an opening (102) in the shaft (10A), in an intended operating state of the shaft (10A), overlaps with an opening (110.1-110.5) in the reference shaft (11) and a severable signal conductor (130) extends through both openings (102, 110.1-110.5) and is functionally connected to an evaluation unit (16), and the evaluation unit (16) is configured so as to record severing of the signal conductor (130) by applying a signal to the signal conductor (130) in order to identify a break in the shaft (10A) ,
**characterized in that** the signal conductor (130) is an electrical conductor and **in that** the opening (102) in the shaft (10A) is arranged on a surface section of the shaft (10A) and **in that** the opening (110.1-110.5) in the reference shaft (11) is arranged on a surface section of the reference shaft (11).

2. Arrangement according to Claim 1, **characterized in that** the openings (102, 110.1-110.5), which overlap in the intended operating state, in the shaft (10A) and the reference shaft (11) overlap less with one another or do not overlap with one another in an overloaded operating state.

3. Arrangement according to Claim 1 or 2, **characterized in that** the signal conductor (130) is embedded in a breakable element (13) made from brittle material.

4. Arrangement according to Claim 3, **characterized in that** the brittle material is ceramic.

5. Arrangement according to either of Claims 3 and 4, **characterized in that** the breakable element (13) has an intended breaking point (131).

6. Arrangement according to one of the preceding claims, **characterized in that** the signal conductor (130) is functionally connected to the evaluation unit (16) through inductive and/or capacitive coupling.

7. Arrangement according to one of the preceding claims, **characterized in that** the signal conductor (130) is functionally connected to a contactless signal transmission element (140; 150), in particular is in electrical contact therewith.

8. Arrangement according to Claim 7, **characterized in that** the contactless signal transmission element (140) is formed in the shape of a coil that extends at least sectionally around the shaft (10A) in the circumferential direction.

9. Arrangement according to Claim 8, **characterized by** a capacitor (15) having two electrodes (150, 151), wherein one of the electrodes is fixed on the shaft (10A) as contactless signal transmission element (150) and is able to be rotated with respect to the other of the electrodes (151) when the shaft (10A) rotates.

10. Arrangement according to one of the preceding claims, **characterized in that** the opening (102) in the shaft (10A) and/or the opening (110.1-110.5) in the reference shaft (11) is/are formed in the shape of a slot.

11. Arrangement according to one of the preceding claims, **characterized in that** the opening (110.1- 110.5) in the reference shaft (11) is larger than the opening (102) in the shaft (10A).

12. Arrangement according to one of the preceding claims, **characterized in that** a plurality of severable signal conductors (130) operatively connected to the evaluation unit (16) and a plurality of pairs of mutually overlapping openings (102, 110.1-110.5) are provided in the shaft (10A) and the reference shaft (11), wherein a severable signal conductor (130) in each case extends through a pair of overlapping openings (102, 110.1-110.5) .

13. Arrangement according to Claim 12, **characterized in that** the plurality of signal conductors (130) extending through the openings (102, 110.1-110.5) are connected in series with one another.

14. Arrangement according to one of the preceding claims, **characterized in that** the shaft (10A) and the reference shaft (11) are connected in a rotationally fixed manner to one another by a breakage protection means (17), wherein the breakage protection means (17) breaks when a predefined maximum force is exceeded.

15. Arrangement according to one of the preceding claims, **characterized in that** the shaft (10A) and the reference shaft (11) are aligned coaxially with respect to one another, in particular such that the reference shaft (11) is arranged within the shaft (10A).

16. Turbomachine (2), in particular in the form of an aircraft engine, **characterized by** an arrangement (1.1-1.4) according to one of the preceding claims.

17. Method for identifying a break in a shaft (10A), having the following steps:
- providing (S100) a shaft (10A);
- providing (S101) a reference shaft (11), able to be rotated jointly with the shaft (10A), having an opening (110.1-110.5) that is arranged on a surface section of the reference shaft (11), wherein the opening (110.1-110.5) in the reference shaft (11), in an intended operating state of the shaft (10A), overlaps with an opening (102) that is arranged on a surface section of the shaft (10A), and a severable electrical signal conductor (130) extends through both openings (102, 110.1-110.5); and
- recording (S102) whether or not the electrical signal conductor (130) is severed by applying a signal to the signal conductor (130) in order to identify a break in the shaft (10A).

## Revendications

1. Arrangement de reconnaissance d'une rupture d'arbre, comprenant :
- un arbre (10A) et
- un arbre de référence (11) qui peut tourner conjointement avec l'arbre (10A),
une ouverture (102) dans l'arbre (10A) dans un état opérationnel conforme à l'usage prévu de l'arbre (10A) chevauchant une ouverture (110.1-110.5) dans l'arbre de référence (11) et un conducteur de signal (130) sectionnable s'étendant à travers les deux ouvertures (102, 110.1-110.5) et étant relié fonctionnellement à une unité d'interprétation (16) et l'unité d'interprétation (16) étant conçue pour, en alimentant le conducteur de signal (130) avec un signal, détecter un sectionnement du conducteur de signal (130) afin de reconnaître une rupture d'arbre de l'arbre (10A),
**caractérisé en ce que** le conducteur de signal (130) est un conducteur électrique et que l'ouverture (102) dans l'arbre (10A) est disposée au niveau d'une portion d'enveloppe de l'arbre (10A) et **en ce que** l'ouverture (110.1-110.5) dans l'arbre de référence (11) est disposée au niveau d'une portion d'enveloppe de l'arbre de référence (11).

2. Arrangement selon la revendication 1, **caractérisé en ce que** les ouvertures (102, 110.1-110.5) de l'arbre (10A) et de l'arbre de référence (11) qui se chevauchent dans l'état opérationnel conforme à l'usage prévu se chevauchent moins ou ne se chevauchent pas dans un état opérationnel hors charge.

3. Arrangement selon la revendication 1 ou 2, **caractérisé en ce que** le conducteur de signal (130) est enrobé dans un élément de rupture (13) en matériau cassant.

4. Arrangement selon la revendication 3, **caractérisé en ce que** le matériau cassant est de la céramique.

5. Arrangement selon l'une des revendications 3 ou 4, **caractérisé en ce que** l'élément de rupture (13) possède un point de rupture voulu (131).

6. Arrangement selon l'une des revendications précédentes, **caractérisé en ce que** le conducteur de signal (130) est relié fonctionnellement à l'unité d'interprétation (16) par un couplage inductif et/ou capacitif.

7. Arrangement selon l'une des revendications précédentes, **caractérisé en ce que** le conducteur de signal (130) est relié fonctionnellement, notamment mis en contact électrique, à un élément de communication de signal (140 ; 150) sans contact.

8. Arrangement selon la revendication 7, **caractérisé en ce que** l'élément de communication de signal (140) est réalisé sous la forme d'une bobine qui s'étend au moins par certaines portions autour de l'arbre (10A) dans la direction circonférentielle.

9. Arrangement selon la revendication 8, **caractérisé par** un condensateur (15) comprenant deux électrodes (150, 151), l'une des électrodes étant fixée à l'arbre (10A) en tant qu'élément de communication de signal (150) sans contact et pouvant tourner par rapport à l'autre des électrodes (151) lors de la rotation de l'arbre (10A).

10. Arrangement selon l'une des revendications précédentes, **caractérisé en ce que** l'ouverture (102) dans l'arbre (10A) et/ou l'ouverture (110.1-110.5) dans l'arbre de référence (11) est/sont réalisée(s) en forme de fente.

11. Arrangement selon l'une des revendications précédentes, **caractérisé en ce que** l'ouverture (110.1-110.5) dans l'arbre de référence (11) est plus grande que l'ouverture (102) dans l'arbre (10A).

12. Arrangement selon l'une des revendications précédentes, **caractérisé en ce que** plusieurs conducteurs de signal (130) sectionnables, reliés fonctionnellement à l'unité d'interprétation (16), et plusieurs paires d'ouvertures (102, 110.1-110.5) se chevauchant mutuellement se trouvent dans l'arbre (10A) et dans l'arbre de référence (11), un conducteur de signal (130) sectionnable s'étendant respectivement à travers une paire d'ouvertures (102, 110.1-110.5) qui se chevauchent.

13. Arrangement selon la revendication 12, **caractérisé en ce que** plusieurs conducteurs de signal (130) qui s'étendent à travers les ouvertures (102, 110.1-110.5) sont branchés en série les uns avec les autres.

14. Arrangement selon l'une des revendications précédentes, **caractérisé en ce que** l'arbre (10A) et l'arbre de référence (11) sont reliés l'un à l'autre solidaires en rotation par le biais d'une sécurité à rupture (17), la sécurité à rupture (17) rompant en cas de dépassement d'une force maximale prédéfinie.

15. Arrangement selon l'une des revendications précédentes, **caractérisé en ce que** l'arbre (10A) et l'arbre de référence (11) sont orientés de manière coaxiale l'un par rapport à l'autre, notamment de telle sorte que l'arbre de référence (11) est disposé à l'intérieur de l'arbre (10A).

16. Turbomachine (2), notamment sous la forme d'un groupe propulseur d'aéronef, **caractérisé par** un arrangement (1.1-1.4) selon l'une des revendications précédentes.

17. Procédé de reconnaissance d'une rupture d'arbre d'un arbre (10A), comprenant les étapes suivantes :
- fourniture (S100) d'un arbre (10A) ;
- fourniture (S101) d'un arbre de référence (11) qui peut tourner conjointement avec l'arbre (10A), comprenant une ouverture (110.1-110.5) qui est disposée au niveau d'une portion d'enveloppe de l'arbre de référence (11), l'ouverture (110.1-110.5) de l'arbre de référence (11), dans un état opérationnel conforme à l'usage prévu de l'arbre (10A), chevauchant une ouverture (102) qui est disposée au niveau d'une portion d'enveloppe de l'arbre (10A) et un conducteur de signal (130) électrique sectionnable s'étendant à travers les deux ouvertures (102, 110.1-110.5) ; et
- détection (S102) si le conducteur de signal (130) électrique est sectionné ou non en alimentant le conducteur de signal (130) avec un signal afin de reconnaître une rupture d'arbre de l'arbre (10A).
